# EUROPEAN PATENT SPECIFICATION

(11) **EP 3 984 497 B1**
(45) Date of publication and mention of the grant of the patent: **30.04.2025**
(21) Application number: 20823495.5
(22) Date of filing: 11.06.2020
(51) Int. Cl.: A61C 7/08

(54) **MOUTHPIECE MANUFACTURING METHOD**
HERSTELLUNGSVERFAHREN FÜR MUNDSTÜCK
PROCÉDÉ DE FABRICATION D'UN APPAREIL BUCCAL

(30) Priority: 12.06.2019 JP 2019109888
(43) Date of publication of application: 20.04.2022
(73) Proprietor: Kuraray Noritake Dental Inc., Kurashiki-shi, Okayama 710-0801 (JP)
(72) Inventor: ITO, Misaki, Tainai-shi, Niigata 959-2653 (JP); SUZUKI, Kenji, Tainai-shi, Niigata 959-2653 (JP)
(74) Representative: D Young & Co LLP
(86) International application number: PCT/JP2020/023025
(87) International publication number: WO 2020/250976

(56) References cited:
- EP-A1- 3 927 521
- EP-A1- 3 946 902
- EP-B1- 3 927 521
- FR-A1- 3 057 156
- JP-A- 2013 081 785
- JP-A- 2017 159 104
- JP-A- 2017 537 687

## Description

### TECHNICAL FIELD

The present invention relates to a method for manufacturing a mouthpiece. The present disclosure further relates to a mouthpiece that is manufactured by an additive manufacturing device and is to be placed within an oral cavity to cover teeth.

### BACKGROUND ART

A method for manufacturing a mouthpiece by an additive manufacturing device has been known (see Patent Literatures 1, 2 and 3 for example).

Patent Literature 1 discloses manufacturing an orthodontic aligner using a 3D printer based on tooth alignment data of a patient. Thereby, an aligner is directly manufactured without manufacturing a male die as in a conventional aligner. Thus, the number of processes is reduced, and accordingly, the cost is also saved.

Patent Literature 2 discloses manufacturing a bite splint using a 3D printer based on tooth alignment data of a patient. This manufacturing provides the bite splint that accurately sets or positions upper and lower jaws after upper and lower jaw osteotomy for the patient with jaw deformity.

Patent Literature 3 discloses a method for manufacturing an orthodontic mouthpiece with supporting structures by an additive manufacturing, said supporting structures being suppressed at the end of the process.

### CITATION LIST

### Patent Literature

Patent Literature 1: JP 2018-94245 A
Patent Literature 2: JP 2006-81747 A
Patent Literature 3: FR 3 057 156 A1

### SUMMARY

### Technical Problem

However, Patent Literature 1 and Patent Literature 2 do not disclose a support provided to the orthodontic aligner and the bite splint manufactured by the 3D printer. Accordingly, the aligner disclosed in Patent Literature 1 and the bite splint disclosed in Patent Literature 2 have an issue that support traces or marks are formed when supports for supporting a manufactured product such as the aligner or the bite splint, which are formed in the manufacturing process, are removed. Patent Literature 3 shows only generic support structures for the orthodontic device.

The support trace or mark generally refers to unevenness (concavity and convexity) formed on the manufactured product after removing the supports for supporting the manufactured product. Such traces or marks (unevenness) can be removed and smoothed by polishing though it takes time.

Inventors have found that aesthetics are impaired especially in transparent mouthpieces since areas where the supports had been formed look different from the other parts or the mouthpiece even after the unevenness of the supports has been removed. The support traces or marks in the present disclosure include areas where the supports had been formed and look different from other parts due to color unevenness or the like.

Specifically, the transparent mouthpiece manufactured by the 3D printer appears to whitish due to diffuse reflection of light by the lamination unevenness or steps on the surface. However, the lamination unevenness or steps are not formed in the areas where the support traces had been formed and do not reflect the light, so that the color of the teeth is reflected as it is. The color of teeth is generally yellowish. Accordingly, when comparing the areas where the support traces had been formed with other parts, color unevenness or the like is noticeable. The color unevenness or the like gives a sense of discomfort to other people who see it and impairs aesthetics.

On the other hand, to improve aesthetics by removing the support traces, the entire surface of the mouthpiece can be polished. In this case, the lamination unevenness is completely removed from the mouthpiece surface, which makes the mouthpiece very transparent. However, it is difficult to polish and completely smooth the mouthpiece surface since the mouthpiece generally has a shape along the concavity and convexity of the surfaces of the teeth. Particularly, it takes a lot of time to polish the concave areas that receive the teeth.

On the other hand, with regard to a case that the mouthpiece has no support traces and the lamination unevenness is formed on the entire surface, the inventors have found that there is no visual discomfort and aesthetics are not impaired even at a stage where the surface has not been polished. Rather, this may even give a patient who has yellowish teeth an effect of making the teeth look whiter and more beautiful than the actual color of his or her teeth since light is diffusely reflected on the surface of the mouthpiece. In other words, the mouthpiece that is manufactured by additive manufacturing without forming the support traces on the surface can easily provide a high aesthetic appearance without polishing the surface thereof

In view of the foregoing, an object of the present disclosure is to provide a mouthpiece with no support trace formed and a method for manufacturing the mouthpiece.

### Solution to Problem

The object of the present invention is a method for manufacturing a mouthpiece, wherein the mouthpiece is to be placed within an oral cavity to cover teeth and manufactured by an additive manufacturing device, the method comprising:
performing additive manufacturing for manufacturing a manufactured product that comprises the mouthpiece, a peripheral portion connected to the mouthpiece, and a plurality of supports configured to support the peripheral portion, and
removing the peripheral portion from the manufactured product,
wherein the peripheral portion is formed to cover and extend along the gingiva of the oral cavity of a patient and the plurality of supports are connected to a bottom end of the peripheral portion to support the peripheral portion.

### Advantageous Effects

With the method according to the present invention, the mouthpiece can be formed with no support trace.

### BRIEF DESCRIPTION OF DRAWINGS

FIG. 1 is an exploded perspective view illustrating a lower jaw and an orthodontic aligner according to a first embodiment. FIG. 2 is a cross-sectional view illustrating the orthodontic aligner according to the first embodiment that is attached to a tooth model of a cheek tooth at a target correction position in three-dimensional data. FIG. 3 is a flowchart illustrating a method of the invetion for manufacturing the orthodontic aligner according to the first embodiment. FIG. 4 is a view illustrating an additive manufacturing process within the invention.
FIG. 5 is a view illustrating the additive manufacturing process within the invention.
FIG. 6 is a view illustrating the additive manufacturing process within the invention.
FIG. 7 is a side view illustrating a manufactured product manufactured by the additive manufacturing process within the invention.
FIG. 8 is a view illustrating a peripheral portion removing step within the invention.
FIG. 9 is a view illustrating a peripheral portion removing step within the invention.

### DESCRIPTION OF EMBODIMENT

Hereinafter, embodiments of a mouthpiece and a method of the invention for manufacturing the mouthpiece according to the present disclosure will be described based on a first embodiment illustrated in the drawings.

### First Embodiment

A mouthpiece in the first embodiment is applied to an orthodontic aligner to be placed within a mouth or oral cavity to cover teeth of a lower jaw.

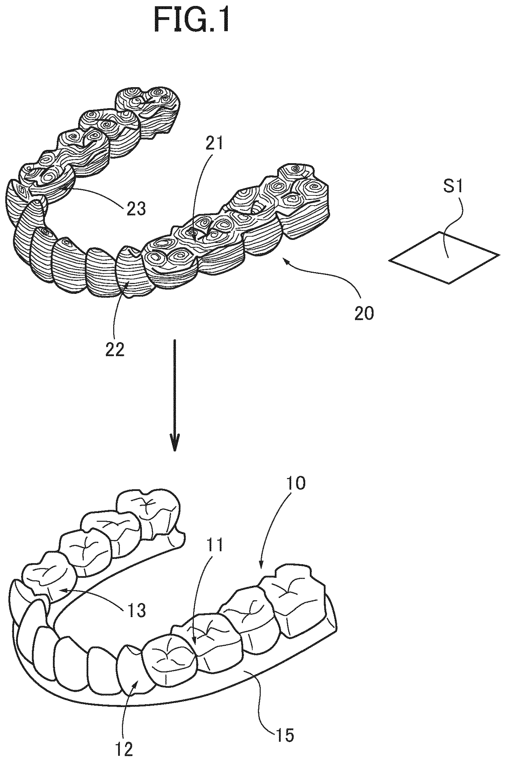

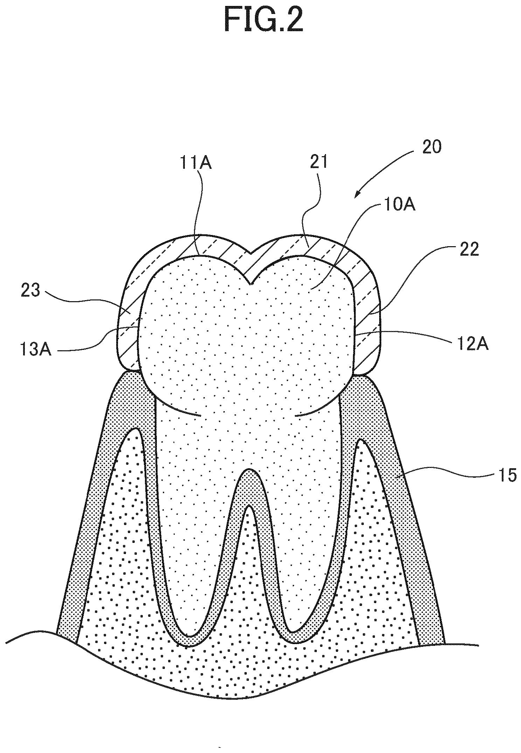

(Configuration of Orthodontic Aligner) FIG. 1 is an exploded perspective view illustrating the lower jaw and the orthodontic aligner according to the first embodiment. FIG. 2 is a cross-sectional view illustrating the orthodontic aligner according to the first embodiment that is attached to a tooth model of a cheek tooth at a target correction position in three-dimensional data. Hereinafter, a configuration of the orthodontic aligner according to the first embodiment will be described. In the drawings, teeth 10 indicate uncorrected teeth and a tooth model 10A indicates a tooth at a target correction position.

As illustrated in FIG. 2, the orthodontic aligner 20 is formed by an additive manufacturing device based on three-dimensional data created to adhere tightly to the tooth model 10A at the target correction position. The orthodontic aligner 20 is attached to the uncorrected teeth 10 and corrects the teeth 10 to the target correction position.

(Configuration of Teeth) As illustrated in FIG. 1, each of the teeth 10 includes a tooth crown which includes an occlusal surface 11, a buccal surface 12, and a lingual surface 13. The teeth 10 are supported by a gingiva 15 surrounding the roots of the teeth 10.

The occlusal surface 11 is an end portion on a biting side of each of the upper and lower teeth and refers to an occlusal surface of the cheek teeth.

(Configuration of Tooth Model) As illustrated in FIG. 2, in a cheek teeth portion, the tooth model 10A includes an occlusal surface model 11A corresponding to the occlusal surface 11, a buccal surface model 12A corresponding to the buccal surface 12, and a lingual surface model 13 A corresponding to the lingual surface 13. In the front teeth portion, the tooth model 10A includes the buccal surface model 12A corresponding to the buccal surface 12, and the lingual surface model 13A corresponding to the lingual surface 13.

(Configuration of Orthodontic Aligner) As illustrated in FIGS. 1 and 2, in the cheek teeth portion, the orthodontic aligner 20 is formed in a shape having a recessed groove defined by an occlusion portion 21, a buccal portion 22, and a lingual portion 23. In the front teeth portion (incisor portion and canine teeth portion), the orthodontic aligner 20 is formed in a shape having a recessed groove defined by the buccal portion 22 and the lingual portion 23. The orthodontic aligner 20 is detachable with respect to the tooth crowns of the lower jaw. The orthodontic aligner 20 is formed in a shape with a recessed groove to cover the tooth crowns of all the teeth 10 of the lower jaw.

As illustrated in FIG. 2, the occlusion portion 21 is formed in a shape following the occlusal surface model 11 A of the tooth model 10A. In other words, the occlusion portion 21 is formed in the shape that covers the occlusal surface model 11A.

The buccal portion 22 is formed in a shape following the buccal surface model 12Aof the tooth model 10A. In other words, the buccal portion 22 is formed in the shape that covers the buccal surface model 12A.

The lingual portion 23 is formed in a shape following the lingual surface model 13A of the tooth model 10A. In other words, the lingual portion 23 is formed in the shape that covers the lingual surface model 13A.

The orthodontic aligner 20 may be colorless and transparent, for example. Note that the orthodontic aligner 20 may be colored transparent or colored opaque.

The orthodontic aligner 20 formed as above is placed to cover the tooth crowns of all the teeth 10 of the lower jaw. The teeth 10 to which the orthodontic aligner 20 is attached are corrected to the target correction position.

A plurality of orthodontic aligners 20 are prepared to gradually correct the teeth 10 to a final target correction position. One orthodontic aligner 20 is formed in a shape that can move and correct the teeth 10 by about 0.25 mm, for example.

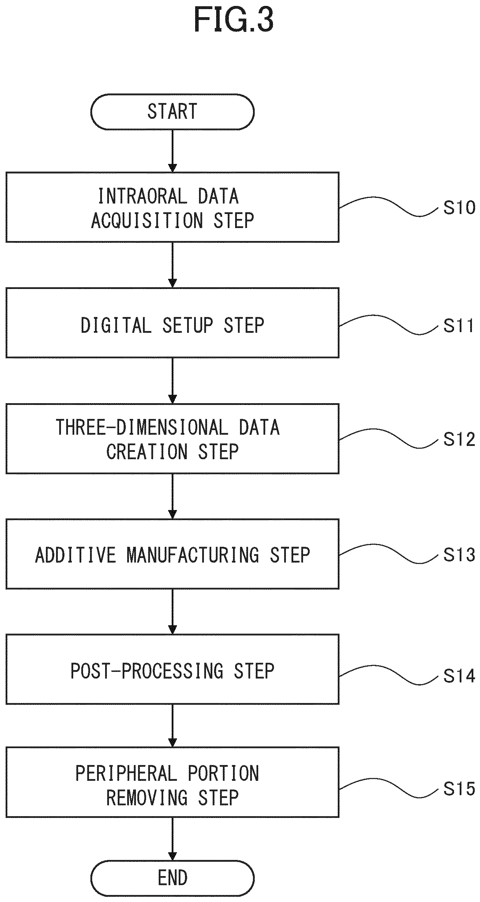

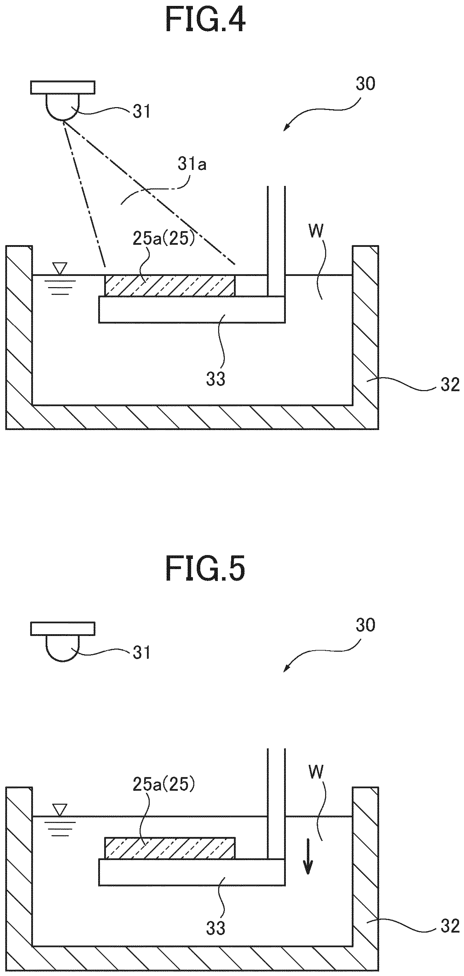

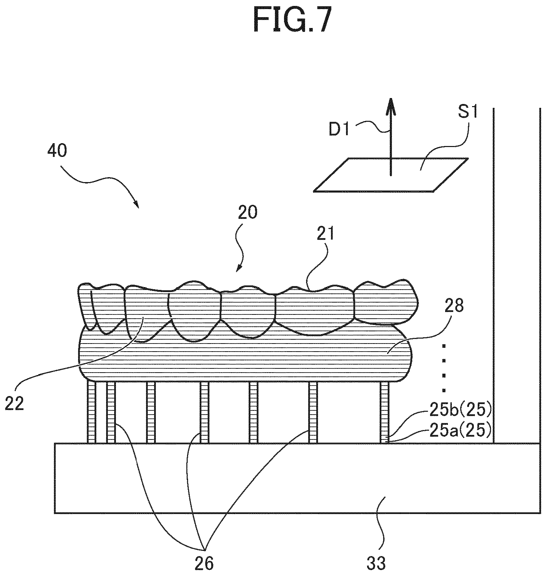

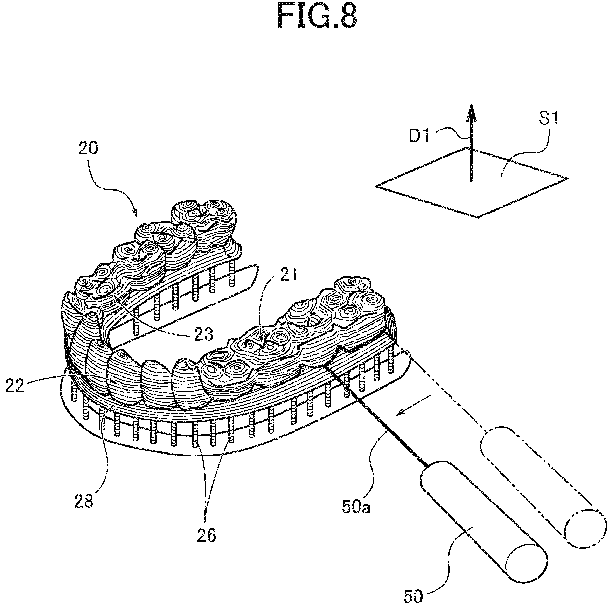

(Method for Manufacturing Orthodontic Aligner) FIG. 3 is a flowchart illustrating a method of the invention for manufacturing the orthodontic aligner 20 according to the first embodiment. FIGS. 4 to 6 are views illustrating additive manufacturing processes. FIG. 7 is a side view illustrating a manufactured product manufactured by the additive manufacturing process according to the invention. FIG. 8 is a view illustrating a peripheral portion removing step according to the invention. Hereinafter, a method of the invention for manufacturing the orthodontic aligner 20 according to the first embodiment will be described.

(Intraoral Data Acquisition Step) In an intraoral data acquisition step (Step S10), three-dimensional data of the teeth 10 and the gingiva 15 in the oral cavity is acquired by scanning the inside of the oral cavity of a patient by a three-dimensional scanner.

(Digital Setup Step) In a digital setup step (Step S11), the intraoral three-dimensional data acquired in the intraoral data acquisition step is analyzed by a computer to create three-dimensional data of the tooth model 10A at the target correction position. For example, in the case of gradually correcting the teeth to the final target correction position, for example, by 0.25 mm, three-dimensional data of tooth models 10A at a plurality of target correction positions is created.

(Three-Dimensional Data Creation Step) In a three-dimensional data creation step (Step S12), three-dimensional data of the orthodontic aligner 20 and a peripheral portion 28, which will be described later, are created based on the three-dimensional data of the tooth model 10A at the target correction position created in the digital setup step and the three-dimensional data of the gingiva 15 created in the intraoral data acquisition step.

Among the created three-dimensional data of the peripheral portion 28, which will be described later, and the orthodontic aligner 20, supports are added only to the peripheral portion 28. The shape, thickness, density, and angle of each support are appropriately adjusted in accordance with the size and the angle of the three-dimensional data, and an overhang portion thereof For example, each of the supports may be conical, cylindrical, prismatic, or may have a curtain-like widened or tapered structure. Each of the supports may have a branch structure. The plurality of supports may be connected or fused in the middle thereof to form a mesh structure or a honeycomb structure, for example. Each of the supports may have a base portion such as one referred to as a base or raft at the bottom thereof.

(Additive Manufacturing Step) In an additive manufacturing step (Step S13), a manufactured product including the orthodontic aligner 20 and the peripheral portion 28 is manufactured by an additive manufacturing device based on the three-dimensional data of the orthodontic aligner 20 and the peripheral portion 28 created in the three-dimensional data creation step.

As illustrated in FIG. 4, the additive manufacturing device 30 includes a container 32 containing a liquid photo-curable resin W, a movable stage 33 configured to be vertically movable within the container 32, and an ultraviolet laser device 31 configured to emit ultraviolet laser light 31a. As the photo-curable resin W, a resin including a radical polymerizable compound such as a (meth) acrylic monomer, a polymerizable monomer containing a cationically polymerizable compound such as an epoxy compound, and a photopolymerization initiator may be used, for example.

As illustrated in FIG. 4, the additive manufacturing device 30 is initially disposed such that the top surface of the movable stage 33 is located below the liquid surface of the photo-curable resin W by a predetermined distance (for example, 0.01 mm).

Then, the ultraviolet laser device 31 scans a thin layer of the photo-curable resin W on the movable stage 33 with the ultraviolet laser light 31a using a predetermined pattern based on the three-dimensional data of the peripheral portion 28 and the orthodontic aligner 20. Thereby, a first hardened layer 25a, which is an example of a hardened layer 25, is formed.

Subsequently, as illustrated in FIG. 5, the movable stage 33 moves downward by a predetermined distance (for example, 0.01 mm). Thereby, a thin layer of the photo-curable resin W is formed on the first hardened layer 25a.

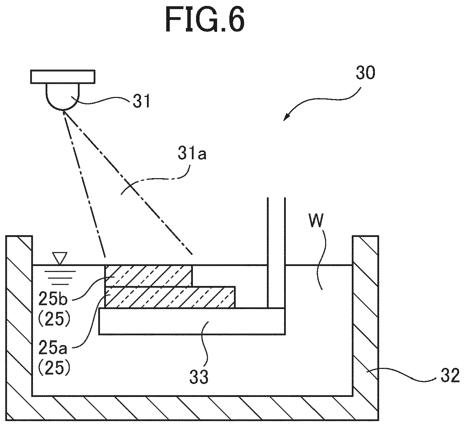

Next, as illustrated in FIG. 6, the ultraviolet laser device 31 scans the thin layer of the photo-curable resin W on the first hardened layer 25a with the ultraviolet laser light 31a using a predetermined pattern based on the three-dimensional data of the peripheral portion 28 and the orthodontic aligner 20. Thereby, a second hardened layer 25b, which is an example of the hardened layer 25, is formed.

Then, by repeating similar operations, the manufactured product 40 is finally manufactured as illustrated in FIG. 7. In the manufactured product 40, a plurality of hardened layers 25a, 25b,..., and 25n (25) are laminated at a predetermined lamination pitch (0.01 mm for example) and the supports 26 are attached.

The manufactured product 40 includes the orthodontic aligner 20, the peripheral portion 28 connected to the orthodontic aligner 20, and the supports 26 configured to support the peripheral portion 28.

The manufactured product 40 is manufactured by laminating the hardened layers 25 at a predetermined lamination pitch (0.01 mm for example) in the vertical direction D1 relative to the occlusal plane S1 along which the portions of the orthodontic aligner 20 that cover the teeth 10 are arranged.

For example, if the tip of each tooth crown that has a plurality of convex-shaped portions is first manufactured or formed, the supports have to be provided to the hardened layers 25 each having a convex shape. In this case, the support traces are undesirably formed in the portions of the orthodontic aligner 20 that cover the teeth 10. To prevent this, each of the hardened layers 25 is arranged to be formed in a continuous shape. Preferably, as illustrated in FIG. 7, the orthodontic aligner 20 is manufactured such that the structure of the orthodontic aligner 20 becomes convex in a manufacturing direction (vertical direction D1). In other words, from the viewpoint of the stability of the manufacturing, it is preferable to perform manufacturing from the roots to the tips of the tooth crowns.

The orthodontic aligner 20 is manufactured by the additive manufacturing device 30 such that the lamination direction corresponds to the vertical direction D1 relative to the occlusal plane S1. In other words, the orthodontic aligner 20 has the lamination traces in the vertical direction D1 relative to the occlusal plane S1 parallel to the arrangement direction of the teeth 10.

The peripheral portion 28 is formed in a shape extending along the gingiva 15. In other words, the peripheral portion 28 is formed to cover the gingiva 15. The peripheral portion 28 is connected to the bottom end of the buccal portion 22 and the bottom end of the lingual portion 23. In other words, the peripheral portion 28 is connected to the root portion of the orthodontic aligner 20 that corresponds to the roots of the tooth crowns.

Each of the supports 26 is formed in a columnar shape of about 1 mm, for example. The plurality of supports 26 are connected to the bottom end of the peripheral portion 28 to support the peripheral portion 28.

(Post-Processing Step) In the post-processing step (Step S14), a part or all of unreacted substances such as an unpolymerized monomer, for example, are removed from the manufactured orthodontic aligner 20. The post-processing step may include the removal of unreacted substances using gravitational force or centrifugal force, the removal of unreacted substances by washing using an organic solvent or air blow, drying, and photopolymerization or heat polymerization by an irradiator using a fluorescent lamp, a halogen lamp, or an LED light source.

(Peripheral Portion Removing Step) In a peripheral portion removing step (Step S15), as illustrated in FIG. 8, the peripheral portion 28 is removed from the orthodontic aligner 20, for example, by a laser beam 50a emitted from a laser processing device 50. At this time, the supports 26 attached to the peripheral portion 28 are also removed from the orthodontic aligner 20.

Note that the order of the post-processing step and the peripheral portion removing step may be reversed when the effects of both steps are sufficiently obtained. From the viewpoint of suppressing the deformation of the manufactured product during the post-processing, it is preferable to perform the post-processing step after the peripheral portion removing step.

The orthodontic aligner 20 is manufactured through the above steps. The orthodontic aligner 20 manufactured as above includes the lamination traces but no support traces. Note that the vertical direction D1 includes an error of about 1°.

(Functions of Orthodontic Aligner and Method for Manufacturing Orthodontic Aligner) Hereinafter, functions of the orthodontic aligner and the method of the invention for manufacturing the orthodontic aligner according to the first embodiment will be described. The method of the invention for manufacturing the mouthpiece (orthodontic aligner 20) according to the first embodiment, wherein the mouthpiece is to be placed within an oral cavity or mouth to cover teeth 10 and manufactured by an additive manufacturing device 30, includes performing additive manufacturing for manufacturing a manufactured product 40 that includes the mouthpiece (orthodontic aligner 20), a peripheral portion 28 connected to the mouthpiece (orthodontic aligner 20), and a support 26 configured to support the peripheral portion 28, and removing the peripheral portion 28 from the manufactured product 40 (FIG. 8).

Thereby, it is possible to prevent the support traces from being formed in the mouthpiece (orthodontic aligner 20). Therefore, it is possible to improve aesthetics without polishing the surfaces when the mouthpiece (orthodontic aligner 20) is placed within the oral cavity or mouth. Moreover, the support traces are not formed in the mouthpiece (orthodontic aligner 20), and accordingly, there is no need to polish and smooth the support traces.

In addition, the support traces are not formed in the mouthpiece (orthodontic aligner 20), and accordingly, it is possible to suppress the feeling of the foreign matter when the mouthpiece (orthodontic aligner 20) is placed within the mouth and improve the feeling of being worn in fit.

Also, the supports 26 are not directly formed in the mouthpiece (orthodontic aligner 20), and accordingly, it is possible to easily decide the positions of the supports 26. Further, the supports 26 are not directly formed in the mouthpiece (orthodontic aligner 20), and accordingly, it is possible to easily respond to changes in the manufacturing directions.

Further, no support trace is formed in the occlusion portion 21 of the mouthpiece (orthodontic aligner 20), and accordingly, the target occlusion can be obtained, and the side effects of occlusion changes due to wearing the mouthpiece (orthodontic aligner 20) can be reduced. Moreover, workability is improved when cleaning the mouthpiece (orthodontic aligner 20).

Moreover, no support trace is formed in the occlusion portion 21 of the mouthpiece (orthodontic aligner 20), and accordingly, it is possible to suppress occlusal incongruity and prevent issues such as malocclusion and temporomandibular joint disease.

In the method of the invention for manufacturing the mouthpiece (orthodontic aligner 20) according to the first embodiment, the peripheral portion 28 is connected to the root portion of the mouthpiece (orthodontic aligner 20) which corresponds to the roots of the tooth crowns (FIG. 7).

Thereby, it is possible to leave the peripheral portion traces, which are generated after removing the peripheral portion 28, in the occlusion portion 21 of the mouthpiece (orthodontic aligner 20). Therefore, the target occlusion can be obtained when the mouthpiece (orthodontic aligner 20) is placed within the oral cavity or mouth.

In the method of the invention for manufacturing the mouthpiece (orthodontic aligner 20) according to the first embodiment, the peripheral portion 28 has a shape extending along the gingiva 15 (FIG. 7).

Thereby, it is unnecessary to design the shape of the peripheral portion 28. Therefore, it is possible to easily manufacture the mouthpiece (orthodontic aligner 20) that can reduce the feeling of the foreign matter when placed within the mouth.

The mouthpiece (orthodontic aligner 20) according to the first embodiment is to be placed within the mouth or oral cavity to cover the teeth 10. The mouthpiece (orthodontic aligner 20) includes the lamination traces but does not include the support traces (FIG. 1).

Thereby, the support traces are not formed in the mouthpiece (orthodontic aligner 20). Accordingly, it is possible to reduce the feeling of the foreign matter when the mouthpiece (orthodontic aligner 20) is placed within the mouth.

An example of the method for manufacturing a mouthpiece according to the present invention has been described based on the first embodiment. However, the scope of the method of the invention is defined by the appended claims.

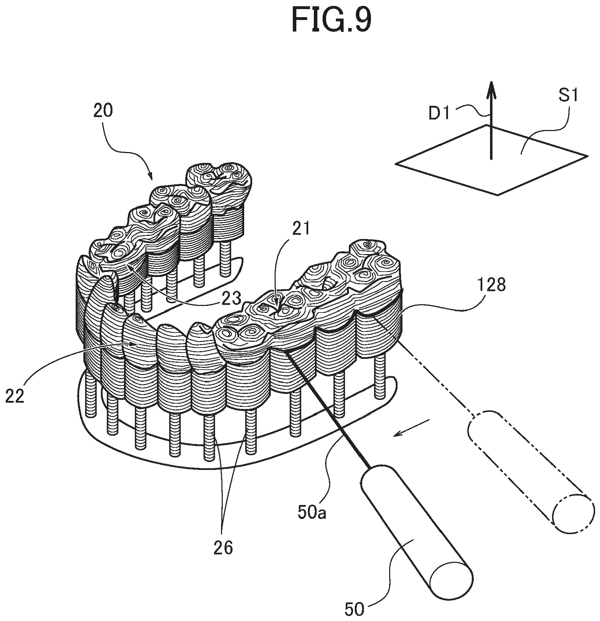

The figure 8 shows an example of the invention in which the peripheral portion 28 is formed in the shape extending along the gingiva 15. However, as illustrated in FIG. 9, a peripheral portion or peripheral portions 128 may also have a shape extending in the vertical direction D1 relative to the occlusal plane S1 from the bottom end of the buccal portion 22 and the bottom end of the lingual portion 23. This makes the consideration or review of the peripheral portion 128 easier. Further, this makes it easy for the peripheral portion 128 to be removed from the orthodontic aligner 20 by the laser processing device 50.

In an example of the invention, the peripheral portion 28 is removed from the orthodontic aligner 20 by the laser beam 50a emitted from the laser processing device 50. However, the peripheral portion may be removed from the orthodontic aligner using a tool such as a nipper or scissors.

A suspension-type stereolithography device that uses a photo-curable resin to be cured by ultraviolet has been described as an example of the additive manufacturing device 30. However, the additive manufacturing device may be a projection-type device that laminates layers by using the projector light to cure the photo-curable resin. Also, the additive manufacturing may be an inkjet-type device that laminates layers by injecting a liquid ultraviolet curable resin and emitting ultraviolet to cure the resin. The additive manufacturing may also be a thermal dissolution lamination type device that laminates a thermal melting resin one by one layer. The additive manufacturing may also be a powder sintering type device that emits high-output laser light rays onto powdered material to sinter the material.

In the first embodiment, the orthodontic aligner 20 is formed in the shape having the recessed groove to cover the tooth crowns as one example. However, the orthodontic aligner may be formed in a shape to cover the tooth crowns and the gingiva, or the tooth crowns and floor or base portions.

In the first embodiment, the orthodontic aligner 20 is formed in the shape having the recessed groove to cover the tooth crowns of all teeth 10 of the lower jaw as one example. However, the orthodontic aligner may be formed in a shape having a recessed groove to cover the tooth crowns of some of the teeth.

In the first embodiment, the present disclosure is applied to the orthodontic aligner 20 to be attached to the tooth crowns of the lower jaw as one example. However, the present disclosure may be applied to an orthodontic aligner to be attached to the tooth crowns of the upper jaw.

In the first embodiment, the present disclosure is applied to the orthodontic aligner 20 to be placed within the mouth or oral cavity to cover the teeth 10. However, the present disclosure is not limited to the orthodontic aligner. The present disclosure may be applied to other mouthpieces such as mouthpieces for preventing teeth grinding, mouthpieces for treating sleep apnea syndrome, mouthpieces for whitening, and mouthpieces for sports. In addition, the mouthpiece according to the present disclosure includes a device to be placed to cover the teeth.

## Claims

1. A method for manufacturing a mouthpiece (20), wherein the mouthpiece (20) is to be placed within an oral cavity to cover teeth (10) and manufactured by an additive manufacturing device (30),
the method comprising:
performing additive manufacturing for manufacturing a manufactured product (40) that comprises the mouthpiece (20), a peripheral portion (28) connected to the mouthpiece (20), and a plurality of supports (26) configured to support the peripheral portion (28), and
removing the peripheral portion (28) from the manufactured product (40),
wherein the peripheral portion (28) is formed to cover and extend along the gingiva (15) of the oral cavity of a patient, and the plurality of supports (26) are connected to a bottom end of the peripheral portion (28) to support the peripheral portion (28).

2. The method according to claim 1, wherein the peripheral portion (28) is connected to a root portion of the mouthpiece (20), the root portion corresponding to a root of a tooth crown.

## Patentansprüche

1. Verfahren zum Herstellen eines Mundstücks (20), wobei das Mundstück (20) zum Abdecken von Zähnen (10) in eine Mundhöhle zu platzieren ist und durch eine Vorrichtung (30) zur additiven Fertigung hergestellt wird,
wobei das Verfahren Folgendes umfasst:
Durchführen einer additiven Fertigung zum Herstellen eines hergestellten Produkts (40), das das Mundstück (20), einen mit dem Mundstück (20) verbundenen Umfangsabschnitt (28) und eine Vielzahl von Stützen (26) umfasst, die zum Stützen des Umfangsabschnitts (28) ausgestaltet sind, und
Entfernen des Umfangsabschnitts (28) von dem hergestellten Produkt (40),
wobei der Umfangsabschnitt (28) so ausgebildet ist, dass er das Zahnfleisch (15) der Mundhöhle eines Patienten abdeckt und sich daran entlang erstreckt, und die Vielzahl von Stützen (26) mit einem unteren Ende des Umfangsabschnitts (28) verbunden sind, um den Umfangsabschnitt (28) zu stützen.

2. Verfahren nach Anspruch 1, wobei der Umfangsabschnitt (28) mit einem Wurzelabschnitt des Mundstücks (20) verbunden ist, wobei der Wurzelabschnitt einer Wurzel einer Zahnkrone entspricht.

## Revendications

1. Procédé de fabrication d'un appareil orthodontique (20), l'appareil orthodontique (20) étant destiné à être placé dans une cavité buccale pour recouvrir des dents (10) et fabriqué par un dispositif de fabrication additive (30),
le procédé comprenant :
la réalisation d'une fabrication additive pour fabriquer un produit manufacturé (40) qui comprend l'appareil orthodontique (20), une partie périphérique (28) reliée à l'appareil orthodontique (20), et une pluralité de supports (26) configurés pour soutenir la partie périphérique (28), et
le retrait de la partie périphérique (28) du produit manufacturé (40),
la partie périphérique (28) étant formée pour couvrir et s'étendre le long de la gencive (15) de la cavité buccale d'un patient, et la pluralité de supports (26) étant reliés à une extrémité inférieure de la partie périphérique (28) pour soutenir la partie périphérique (28).

2. Procédé selon la revendication 1, la partie périphérique (28) étant reliée à une partie racine de l'appareil orthodontique (20), la partie racine correspondant à une racine d'une couronne dentaire.
